# EUROPEAN PATENT APPLICATION

(11) **EP 2 055 190 A1**
(43) Date of publication of application: **06.05.2009**
(21) Application number: 07380300.9
(22) Date of filing: 02.11.2007
(51) Int. Cl.: A21B 3/15

(54) **Baking tray**

(71) Applicant: Carpinteria Metalica Bengolea, S.L., 48903 Retuerto-Baralaldo (ES)
(72) Inventor: Dones Adiño, Eulogio, 48903 Retuerto-Barakaldo (ES)
(74) Representative: Canadell-Isern, Roberto

(57) **Abstract**

Tray (1) of perforated sheet metal and a frame (2), in which the frame (2) is joined over the edge of its crosspieces to each longitudinal rib (3) in the form of narrow V-shaped wings, suitable for receiving between them the longitudinal edges of the tray (1), previously curved downwards, trapping them between said wings (3). This frame (2) is also joined over the edge of its cross pieces to a rib (4) that overlaps itself, trapping the transverse edge of the tray (1), in the case of flat trays, while in the trays with a wavy surface, this rib (4) overlaps itslef alternatively over the successive lower sections of the transverse edge of the wavy-surface tray.

## Description

### OBJECT OF THE INVENTION

The object of this inventiom is a device for assembling bakery trays, which provides many advantages to its function, which will be listed later on, as well as other advantages inherent to its organisation and make up.

This device concerns a system for fastening the perforated sheet metal that is the carrying part of the trays to the frame that gives it consistency.

### BACKGROUND OF THE INVENTION

At present and as a reference of the state of the technique, it should be mentioned that the bakery trays are made by, in one of their most frequent versions, riveting the sheet metal to the frame and the incorporation of a spline for handling and for protection.

This system is expensive, because it first requires making holes and laying out the rivets and then soldering it to the spline.

### DESCRIPTION OF THE INVENTION

The device for the assembly of bakery trays, object of the present invention, satisfactorily solves the mentioned disadvantages with an extremely simple and practical system, easy in its contruction and noticeably functional, made up of a perforated metal sheet and a frame, where the frame is joined over the edge of its crosspieces to each longitudinal rib in very narrow V-shaped wings, suitable for receiving the longitunidal edges of the tray, which are curved downwards, and are trapped between said wings.

Also, this frame is joined over the edge of its cross pieces to a rib that overlaps itself, trapping the transverse edge of the tray, in the case of the flat trays, while in trays with wavy surfaces this rib overlaps itself alternatively over the successive lower sections of the tranverse edge of the wavy-surface tray.

In order to complement the description that will follow and with the purpose of helping to provide a better understanding of its characteristics, the following description is accompanied by a set of plans, whose figures represent, as an example but not limited to, the invention's most significant details.

### BRIEF DESCRIPTION OF THE FIGURES

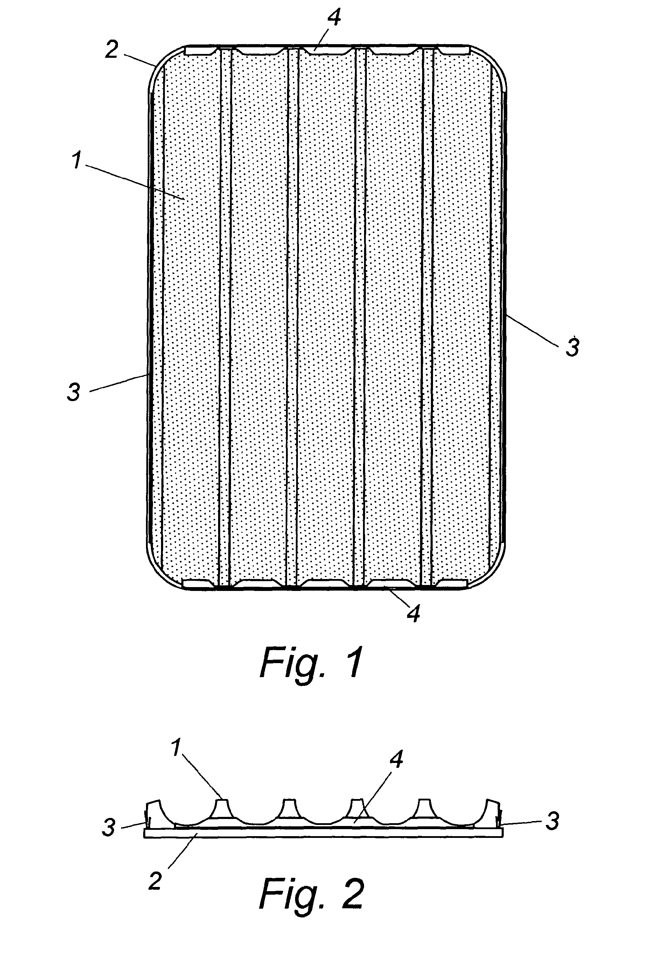

Figure 1. Shows a view of the layout of the entire set.
Figure 2. Shows a side view of the same.

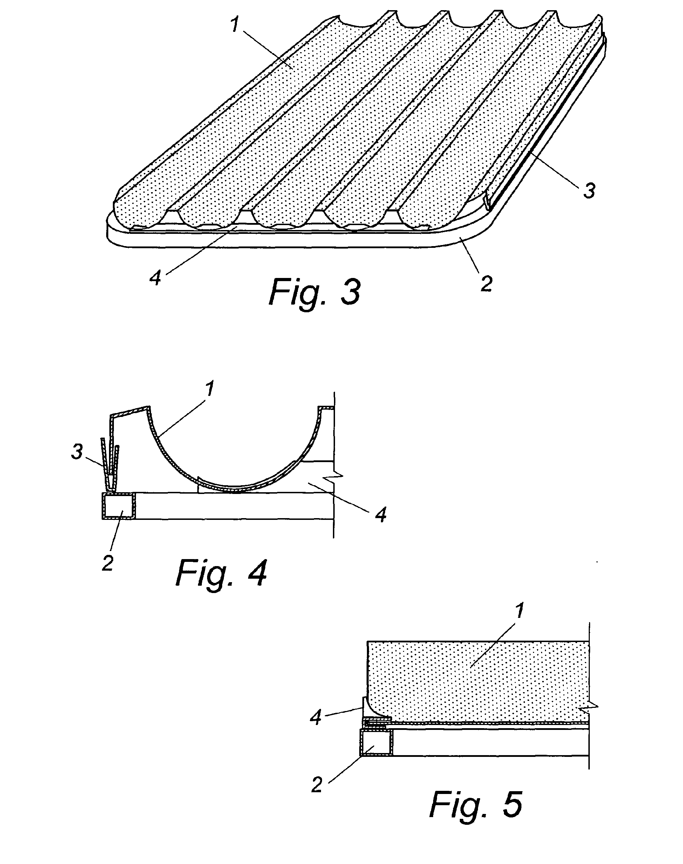

Figure 3. Shows a view in perspective of said set.
Figure 4. Shows a partial view of a cross section.
Figure 5. Shows a partial view of a longitudinal section.

### DESCRIPTION OF AN EXAMPLE OF THE INVENTION's PERFORMANCE

Looking at the mentioned figures and according to the adopted numeration, an example can be seen in them that includes but is not limited to the invention, which consists of a device for the fastening of bakery trays, made up of a tray (1) of perforated sheet metal and a frame (2), in which the frame (2) is joined over the edge of its crosspieces to each longituidinal rib (3) in the form of narrow V-shaped wings, suitable for receiving between them the longitudinal edeges of the tray (1), which are curved downwards, becoming trapped between said wings (3).

This frame (2) is also joined over the edge of its cross pieces to a rib (4) which overlaps itself trapping the transverse edge of the tray (1), in the case of flat trays, while in the trays with wavy surfaces, this rib (4) overlaps itself alternately over the successive sections of the lower transverse edge of the wavy-surface tray, as in the case illustrated by the figures.

## Claims

1. DEVICE FOR THE ASSEMBLY OF BAKERY TRAYS, destined to insure the union of a tray (1) of perforated sheet metal and its corresponding frame (2), **characterised** essentially because the frame (2) is joined over the edge of its crosspieces to each longitudinal rib (3) in the form of narrow V-shaped wings, these wings (3) being suitable for receiving between them the longitudinal edges of the tray (1), previously curved downwards, trapping them between the aforementioned wings (3).

2. DEVICE FOR THE ASSEMBLY OF BAKERY TRAYS, according to claim 1, **characterised** because said frame (2) is also joined over the edge of its cross pieces to a rib (4) which overlaps itsself, trapping the transverse edge of the tray (1) in the case of the flat trays.

3. DEVICE FOR THE ASSEMBLY OF BAKERY TRAYS, according to claim 2, **characterised** because in trays with wavy surfaces, this rib (4) of the frame (2), overlaps itself alternatively, trapping the successive lower sections of the transverse edge of the wavy-surface tray.
